(19) Europäisches Patentamt
European Patent Office
Office européen des brevets

(11) Veröffentlichungsnummer: **0 374 125 A2**

(12) # EUROPÄISCHE PATENTANMELDUNG

(21) Anmeldenummer: **89890319.0**

(51) Int. Cl.[5]: **C09K 17/00, C05G 1/00**

(22) Anmeldetag: **13.12.89**

(30) Priorität: **16.12.88 AT 3075/88**

(43) Veröffentlichungstag der Anmeldung: **20.06.90 Patentblatt 90/25**

(84) Benannte Vertragsstaaten: **AT BE CH DE ES FR GB GR IT LI LU NL SE**

(71) Anmelder: **BRIGL & BERGMEISTER PAPIERFABRIK GESELLSCHAFT M.B.H.**
**Niklasdorf 67**
**A-8712 Niklasdorf(AT)**

(72) Erfinder: **Wurz, Erich, Dipl.-Ing. Dr.**
**Niklasdorf 68**
**A-8712 Niklasdorf(AT)**

(74) Vertreter: **Itze, Peter, Dipl.-Ing. et al**
**Patentanwälte Casati, Wilhelm, Dipl.-Ing. Itze, Peter, Dipl.-Ing. Amerlingstrasse 8**
**A-1061 Wien(AT)**

(54) **Bodenverbesserungsmittel.**

(57) Biokomplexe bildendes Bodenverbesserungsmittel, welches als Wirkkomponente wenigstens einen substituierten, wasserlöslichen Cellulose-Mischether enthält. Diesem Bodenverbesserungsmittel kann noch eine die enzymatische Zugänglichkeit des bzw. der Cellulose-Mischether erhöhende Substanz, z.B. Harnstoff, zugesetzt sein.

EP 0 374 125 A2

## Bodenverbesserungsmittel

Die Erfindung bezieht sich auf ein Biokomplexe bildendes Bodenverbesserungsmittel.

Nach bisher bekannten Erkenntnissen wird das Waldsterben durch zahlreiche Umweltfaktoren hervorgerufen, die nur sehr langsam abgebaut werden können. Es ist daher wünschenswert, die Vitalität der Bäume zu steigern, wobei z. B. aus Nadelanalysen hervorgeht, daß ein Mangel an essentiellen Elementen und Pigmentfarbstoffen herrscht. Daher wird eine Zunahme der Chlorophyll-Carotinbildung als positive Wachstumsfaktoren und eine Abnahme der Xanthine als negative Faktoren angestrebt.

Nun wird aber der Einsatz von bekannten Düngemitteln mit seinen hohen Einsatzmengen infolge der negativen Auswirkungen auf das Grundwasser abgelehnt, wodurch diese als "Kunstdünger" bezeichneten klassischen Düngemittel im Waldbesitz nicht eingesetzt werden.

Es wird nunmehr versucht, mit Hilfe der sogenannten "Agro-Biotechnologie" ein entsprechendes Gesunden der Pflanzen herbeizuführen. Ein Beispiel dafür ist die Aktivierung der Mycorrhiza-Wurzelpilze durch Eiweiß, wobei die den Celluloseabbau bewirkenden Enzyme, also die Zellulasen, gebildet werden, sodaß die Wurzellöslichkeit von den Nährstoffen verbessert werden. Diese Abbauprodukte der Cellulose und Hemicellulosen bilden dann Biokomplexe (Mg, Ca, Mn, Fe usw.). Diese Biokomplexbildner fördern somit den Transport und das Wurzelaufnahmevermögen von Nährstoffen.

Der Erfindung liegt nun die Aufgabe zugrunde, einen derartigen Biokomplexbildner zu schaffen, welcher sowohl eine bessere Aufnahme der Nährstoffe durch die Pflanzen als auch eine Verbesserung des Bodens als solchen erzielt.

Erfindungsgemäß wird diese Aufgabe dadurch gelöst, daß das Bodenverbesserungsmittel als Wirkkomponente wenigstens einen substituierten, wasserlöslichen Cellulose-Mischether enthält. Diese Mischether sind durch Cellulasen leicht abbaubar, wobei dadurch der Transport von Magnesium, Calcium und Spurenmetallen durch das Wurzelsystem über die Nährstofflösung so verbessert wird, daß schon innerhalb einer Vegetationsperiode der Anteil an Farbpigmenten sich nahezu verdoppelt. Dieser Zuwachs an Farbpigmenten ist die Basis eines aktiven Holzzuwachses, da Chlorophyll als Lichttransformator die Bildung von Cellulose positiv beeinflußt.

Vorteilhafterweise kann der Cellulose-Mischether mit Amino-und oder Sulfogruppen, vorzugsweise mit einem Substitutionsgrad von Amino-bzw. Sulfogruppe : Molglukose von 0,1 bis 0,6 bzw. 0,2 bis 0,6 substituiert sein. Aufgrund der Substitution mit Amino- und oder Sulfogruppen, insbesondere mit dem niedrigen Substitutionsgrad, wird ein guter enzymatischer Abbau des Zellulose-Mischethers erreicht. Dabei kann der bzw. die Cellulose-Mischether zusätzlich noch durch eine die Wasserlöslichkeit erhöhende Spacer-Substanz substituiert sein, was eine Aufweitung des Celluloseraumgitters ergibt, sodaß die vorerwähnten Substitutionsgrade mit Sulfogruppen und/oder Aminogruppen in dem angeführten niedrigen Bereich gehalten werden können, wobei trotzdem die Wasserlöslichkeit des Cellulose-Mischethers gegeben ist. Besonders vorteilhaft kann dabei die Spacer-Substanz eine, vorzugsweise durch Aminogruppen substituierte Kohlenwasserstoffkette sein, wobei der durchschnittliche Substitutionsgrad von Aminogruppe : Mol Glucose vorzugsweise 0,01 bis 0,1 beträgt. Ein derartiges Bodenverbesserungsmittel kann folgende Zusammensetzung aufweisen:

Cellulose-Mischether etwa 70 %, Kaliumphosphat etwa 16 %, Kaliumchlorid etwa 10 % und Propyl-dihydroxi-Sulfonsaures Natrium etwa 4 %, wobei das Mittel in 10 %iger Lösung nach Höpper bei 20 ° eine Viskosität von etwa 10 mPa.s aufweist.

Das erfindungsgemäße Bodenverbesserungsmittel kann zusätzlich noch eine, die enzymatische Zugänglichkeit des bzw. der Cellulose-Mischether erhöhende Substanz, z.B. Harnstoff, enthalten. Harnstoff dient dabei in Lösung nicht in erster Linie als Stickstofflieferant für den Boden, sondern wirkt als Lösungsvermittler für den niederveretherten Mischether, wodurch die enzymatische Abbaubarkeit durch die Cellulase wesentlich verbessert wird. Es wird nämlich der Lösungszustand des Mischethers, also das Sol-Gel-Verhältnis für eine besonders gute Wirksamkeit der Cellulasen verbessert. Bevorzugt kann dabei die Menge an enzymatische Zugänglichkeit erhöhende Substanz etwa der Menge an Cellose-Mischether entsprechen.

Ein erfindungsgemäßes, mit der die enzymatische Zugänglichkeit erhöhenden Substanz versehenes Bodenverbesserungsmittel kann dabei folgende Zusammensetzung aufweisen: Cellulose-Mischether etwa 43 %, Kaliumphosphat etwa 8 %, Kaliumchlorid etwa 5 %, Propyl-dihydroxi-Sulfonsäure etwa 2 %, Harnstoff etwa 42 %, wobei in 10%iger Lösung eine Viskosität von etwa 3,5 mPa.s vorherrscht.

Wie aus den beiden Rezepturen hervorgeht, werden die bei der Cellulose-Mischether-Produktion anfallenden Beiprodukte, wie Kaliumphosphat, Kaliumchlorid oder Propyl-dihydroxi-Sulfonsäure durch den Harnstoff sozusagen "verdünnt", sodaß das durch mit Harnstoff versetzte Bodenverbesserungsmittel sich

hervorragend als Biokomplexbildner für verschiedene biochemische Vorgänge, wie Bodenaktivierung, Humusbildung und Abwasseraufbereitung eignet. Die bei der Veretherungsreaktion auftretenden Beiprodukte sind dabei in einer solchen Form, das sie den behandelnden Boden nicht belasten und nicht als Störstoffe wirken.

Der in dem erfindungsgemäßen Bodenverbesserungsmittel enthaltene Cellulose-Mischether kann dabei etwa folgende Struktur aufweisen:

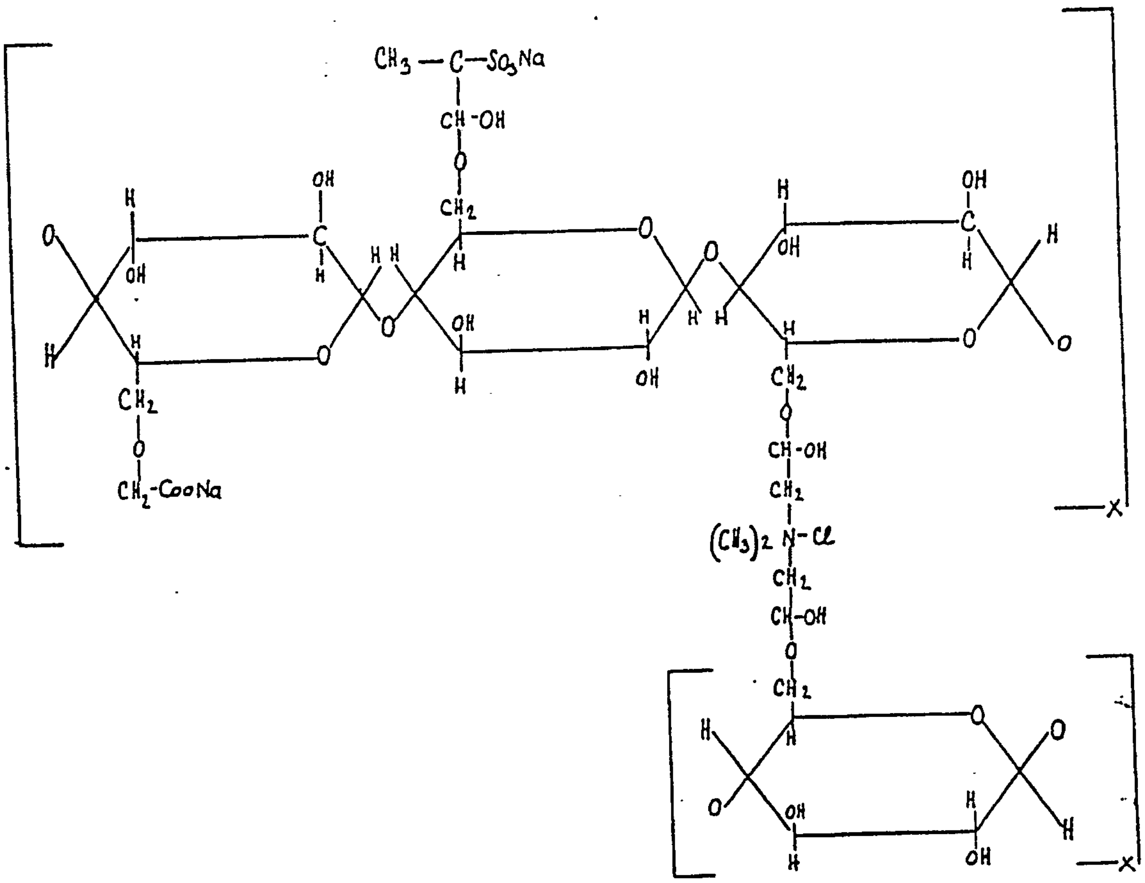

Das erfindungsgemäße Verfahren zur Herstellung des erfindungsgemäßen Bodenverbesserungsmittels wird nachstehend anhand eines Ausführungsbeispieles näher erläutert.

400 kg Buchenkunstseiden-Zellstoff werden in einem Reaktionskollergang, wie er z.B. in dem österr.Patent Nr. 170258 beschrieben ist, mit 330 kg Wasser, 0,05 kg Polyglykolether, je 100 g Kupfersulfat und Mangansulfat und 20 kg gelöstem Diallyl-Dimethylammoniumchlorid 1 Stunde lang angekollert. Dann werden 240 kg Kalilauge (48 Gew.- %) mit 150 l Wasser verdünnt und zur Bildung der Alkalizellulose dem Reaktionskollergang zugesetzt. Nach der Alkalisierung der Cellulose wird 140 kg Natriummonochloracetat zur Veretherung hinzugefügt und reagieren gelassen. Nach einer Stunde Alkalisierung werden 80 kg Methallylsulfonsaures Natrium, 12 kg Kaliumpersulfat und 4 kg Harnstoff eingetragen. Nach 2 h Reaktionszeit werden zur Verdichtung des sehr lockeren Reaktionsproduktes 100 kg gereinigte niederviskose Carboximethylcellulose im Kollergang zugesetzt. Nach weiteren 4 h Nachreife in einem Reifemischer wird in dieser Anlage mit 200 kg Monokaliumphosphat neutralisiert.

Nach diesen Reaktionen wird über Trocknung und Mahlung das Fertigprodukt herausgearbeitet.

Das Sulfonierungsmittel Methallylsulfonsaures Natrium kann dabei wenigstens teilweise durch das Natriumsalz der Vinylsulfonsäure ersetzt werden. Gleichfalls kann das Veretherungsmittel, nämlich die Monochloressigsäure, wenigstens teilweise durch ungesätttigte Carbonsäure, vorzugsweise Dimethylacrylsäure, Methacrylsäure oder Maleinsäure ersetzt werden.

Bei dem erfindungsgemäßen Bodenverbesserungsmittel liegt somit ein Cellulose-Mischether mit Reaktionskomponenten Amino-Sulfo-Carboxi-Methylcellulose vor. Dieser Mischether ist dabei so aufgebaut, daß ein rascher Aufbau der Kettenmoleküle durch Cellulase gegeben ist. Es resultiert damit ein Ionentausch im Molekularbereich der Glucose und Cellulose mit den oben angeführten Reaktionsgruppen. Dieser Cellulose-Mischether besitzt dabei die Eigenschaft, die Elemente des Bodens, wie z.B. Calcium, Magnesium und Spurenmetalle in eine wurzellösliche Form zu bringen, wodurch die Vitalität und das Wachstum von verschiedenen Pflanzen in Wald und Feld gefördert wird. Der Zusatz von Harnstoff verbessert die Reaktionsfähigkeit durch Verbesserung des Lösungszustands im Sinne der enzymatischen Zugänglichkeit. Es werden dadurch eine Bodenaktivierung bei Wald und Feld sowie eine Verbesserung der Humusbildung aus Müll erzielt. Weiters ist eine Kombination mit klassischen Düngemitteln möglich und es wird eine biologische Abwasseraufbereitung im Sinne der Abbauaktivierung organischer Substanzen erzielt. Schließlich kann die Herabsetzung des Abbaues von Hemicellulosen durch Bleichchemikalien erreicht werden.

Versuche an Topfkulturen als auch Freilandversuche ergaben, daß in geeigneter Dosierung verabreichte Gaben an erfindungsgemäßem Bodenverbesserungsmittel signifikante Zunahmen des Frischgewichtes der Pflanzen, wobei eine Zugabe von Harnstoff diese Zunahme noch gesteigert hat. Auch die Blattfläche, insbesondere der zweiten Folgeblätter, von mit dem erfindungsgemäßen Bodenverbesserungsmittel behandelter Pflanzen waren hochsignifikant größer als jene von unbehandelten Pflanzen.

## Ansprüche

1. Biokomplexe bildendes Bodenverbesserungsmittel, dadurch gekennzeichnet, daß es als Wirkkomponente wenigstens einen subsstituierten, wasserlöslichen Cellulose-Mischether enthält.

2. Bodenverbesserungsmittel nach Anspruch 1, dadurch gekennzeichnet, daß der Cellulose-Mischether mit Amino- und/oder Sulfogruppen, vorzugsweise mit einem Substitutionsgrad von Amino- bzw. Sulfogruppe zu Mol Glucose von 0,1 - 0,6 bzw. 0,2 - 0,6, substituiert ist.

3. Bodenverbesserungsmittel nach Anspruch 1 oder 2, dadurch gekennzeichnet, daß der bzw. die Cellulose-Mischether zusätzlich durch eine, die Wasserlöslichkeit erhöhende Spacersubstanz substituiert ist.

4. Bodenverbesserungsmittel nach Anspruch 3, dadurch gekennzeichnet, daß die Spacersubstanz eine, vorzugsweise durch Aminogruppen substituierte Kohlenwasserstoffkette ist, wobei der durchschnittliche Substitutionsgrad von Aminogruppe von Mol Glucose vorzugsweise 0,01 - 0,1 beträgt.

5. Bodenverbesserungsmittel nach Anspruch 4, dadurch gekennzeichnet, daß es folgende Zusammensetzung aufweist:

| | |
|---|---|
| Cellulose-Mischäther | etwa 70 % |
| Kaliumphosphat | etwa 16 % |
| Kaliumchlorid | etwa 10 % |
| Propyl-dihydroxi-Sulfonsaures Na | etwa 4 %. |

und in 10%iger Lösung nach Höppler bei 20 °C eine Viskosität von etwa 10 mPa.s. besitzt.

6. Bodenverbesserungsmittel nach einem der Ansprüche 1 bis 4, dadurch gekennzeichnet, daß es zusätzlich noch eine, die enzymatische Zugänglichkeit des bzw. der Cellulose-Mischether erhöhende Substanz, z.B. Harnstoff, enthält.

7. Bodenverbesserungsmittel nach Anspruch 6, dadurch gekennzeichnet, daß die Menge an enzymtische Zugänglichkeit erhöhende Substanz etwa der Menge an Cellulose-Mischether entspricht.

8. Bodenverbesserungsmittel nach Anspruch 7, dadurch gekennzeichnet, daß es folgende Zusammensetzung aufweist:

| | |
|---|---|
| Cellulose-Mischether | etwa 43 % |
| Kaliumphosphat | etwa 8 % |
| Kaliumchlorid | etwa 5 % |
| Propyl-dihydroxi-Sulfonsäure | etwa 2 % |
| Harnstoff | etwa 42 % |

und in 10%iger Lösung eine Viskosität von etwa 3,5 mPa.s besitzt.

9. Verfahren zur Herstellung eines Bodenverbesserungsmittels nach einem der Ansprüche 1 bis 8, dadurch gekennzeichnet, daß als Sulfonierungsmittel methallylsulfonsaures Natrium und vorzugsweise

Kaliumpersulfat zur Aktivierung der Doppelbindungen eingesetzt wird.

10. Verfahren nach Anspruch 9, dadurch gekennzeichnet, daß methallylsulfonsaures Natrium wenigstens teilweise durch das Natriumsalz der Vinylsulfonsäure ersetzt wird.

11. Verfahren nach Anspruch 9 oder 10, dadurch gekennzeichnet, daß die in an sich bekannter Weise als Veretherungsmittel eingesetzte Monochloressigsäure wenigstens teilweise durch ungesättigte Carbonsäuren, vorzugsweise Dimethylacrylsäure, Methacrylsäure oder Maleinsäure, ersetzt wird.